# EUROPEAN PATENT APPLICATION

(11) **EP 1 918 868 A1**
(43) Date of publication of application: **07.05.2008**
(21) Application number: 08001440.0
(22) Date of filing: 25.02.2002
(51) Int. Cl.: G06Q 10/00, C21B 3/00

(54) **Primary products production system and method**

(30) Priority: 26.02.2001 AU PR335801; 30.10.2001 AU PR856201
(62) Divisional of application: 02700023.1
(71) Applicant: BHP Innovation Pty Ltd., Melbourne, VIC 3000 (AU)
(72) Inventor: The designation of the inventor has not yet been filed
(74) Representative: South, Nicholas Geoffrey

(57) **Abstract**

The present invention relates to a primary product production system, and a method of supplying raw material (15) for the production. The row material (15) is provided in a manner, inter-alia, that is an improvement in the delivery and/or selection of supplied materials used. In a particular form, the product results from metal making and/or the coal industry. In a generic overall description, a customer (10) specifies a processed product as set out in an order (11) which typically includes quality and quantity of processed product such as pig iron (33) or other product, and places it. Changes (12) may also be made. This information is input to a database/computer (20) which then determines from the order (11, 12) which sources of raw materials (15) to the foundry or refinery (9) to produce a primary product which fulfils customer (10) orders (11) and/or changes (12). The raw material(s) (15) may be supplied from any 'asset' (1-n).

## Description

### FIELD OF INVENTION

The present invention relates to a primary product production system, and a method of supplying material for a primary product production system, In particular, the present invention is directed to the provision of raw materials in a manner that provides, inter-alia, an improvement in the delivery and /or selection of supplied materials used in primary product production systems and methods. In one particular form, the present invention relates to primary product manufacturing, and a method of supplying materials used in the production of primary product. In another particular form, the present invention relates to the production of primary products resultant from the metal making and / or coal industries.

### BACKGROUND ART

Systems and methods used for the supply of raw materials and the production of a primary product are generally based on a large scale. For example, in the production of Hot Metal, raw materials, such as iron ore and coal is sourced from separate mines, which are usually geographically remote from the foundry site where the Hot Metal is produced. These bulk raw materials are then usually transported great distances by road and/or rail and/or ship and a system of cranes and conveyors to the foundry. However, it is current practice also to stockpile the raw materials so that the supply of the raw materials into the foundry can be coordinated with foundry output and customer orders. In other words, raw materials are generally mined and transported to a stockpile near the foundry or a remote site until they are required by the foundry.

In business terms, a stockpile is considered to be an under-utilised asset. In effect, there are costs associated with the provision of a site to store the raw materials, lost opportunity cost in terms of cash flow, in that expenses have been incurred in the mining/supply of raw materials, including transport, but the materials have not yet been converted into a saleable commodity and customers have not yet purchased the commodity, meaning the foundry has not yet had the benefit of cash flow from commodity sales. There is a need to better utilise assets.

Where customers have specific needs, such as a need for the supply of Hot Metal having specific specifications and composition, the foundry usually supplies Hot Metal falling within a range of parameters as set out, usually, in a 12 month supply contract. The contract may provide a relative premium price for Hot Metal having a certain preferred composition, and also provide a relatively poor price for Hot Metal not having the preferred composition. It is known that the characteristics of raw materials vary for mine to mine, and even vary within each mine. Thus a stockpile of material from a mine or a number of mines will include possibly great variations in the raw material characteristics. When the stockpile is fed to the foundry, due to the variations in the composition of the raw materials supplied to the foundry, it is difficult to provide a relatively consistent grade of Hot Metal and thus, the foundry has difficulty in producing Hot metal of a quality within a customer's contract range and may in fact, produce Hot Metal which falls outside the range acceptable to customers. This Hot metal outside a customer's range is difficult, If at all possible to sell, and thus represents another under-utilised asset of the business.

De-phosphorising plants have been utilised in the past, to overcome the problem of the production of Hot metal which is unacceptable to the foundry's customers. This involves further &/or additional processing the Hot Metal. Not only does this involve the construction and operation of another plant, but the reprocessing involves moving the-liquid Hot Metal to this intermediate plant, then bubbling an inert gas plus the de-phosphorising agent (eg calcium fluoride or barium fluoride) through the Hot Metal. This chemical action separates the phosphorous into a slag which is skimmed off prior to returning the Hot Metal to the processing chain, all of which incurs further expense in the supply of Hot Metal to customers. There is a need to enable the supply of Hot Metal which is more consistent in meeting specified parameters of customers.

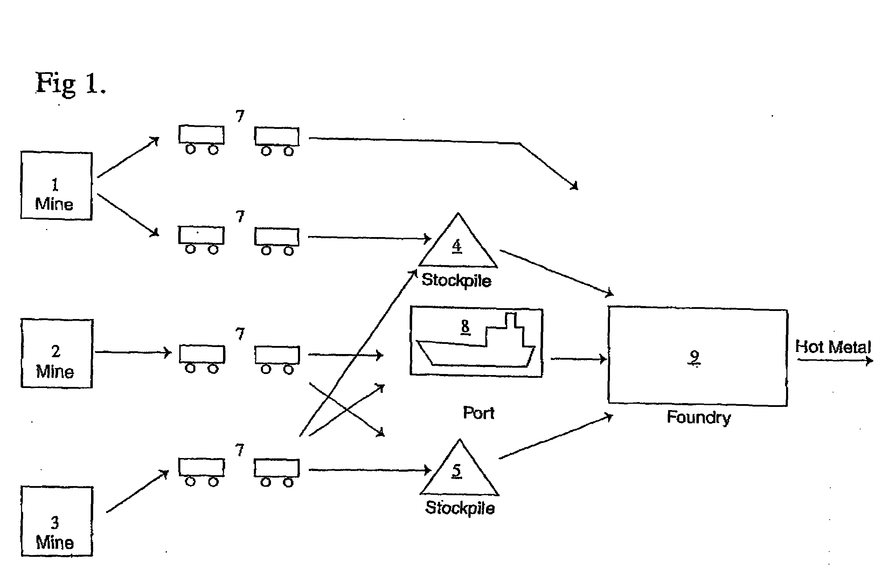

Further improvements are also considered necessary in the manner in which materials are supplied to the foundry. Current practices of supply of material to a foundry, such as the supply chain, are primarily based on a linear programming technique. This is a supply chain of raw materials is based largely on a lowest cost delivery basis. In this regard, Figure 1 illustrates an example supply chain for the supply of the main raw materials for the production of Hot Metal. Mines 1, 2 and 3 indicate raw material sources. They may be iron ore, coal and/or other materials. These are transported 7 to stockpiles 4, 5 or delivered to a port 8 for transport by a ship. At some point In time, the materials are delivered to the foundry either from the mine 1 directly, from stockpiles 4,5 and/or the ship from port 8. The materials are provided to the foundry for the production of Hot Metal. As noted above, the present supply chain arrangements tend to result in the production of Hot Metal of varying quality or characteristics. There is therefore also considered to be a need to provide an alternative and/or improved supply chain.

### SUMMARY OF INVENTION

The present invention provides a system adapted to determine a preferred supply path for raw material(s) to be used in the production of a primary product, the system including:
A network for providing information corresponding to at least one asset,
First means for determining customer requirements,
Second means for determining production criteria, where determination is made with reference to the information corresponding to the at least one asset, and
Third means repetitively determining utilisation of the at least one asset to enable production of the primary product substantial in accordance with the customer requirements.

Preferably, the third means periodically or continuously determines asset utilisation. Furthermore, preferably, the third means repetitively determines the asset utilisation based on changes in the information corresponding to at least one of the at least one asset(s). Furthermore, preferably the third means determines utilisation with reference to fourth means for asset management including repair and maintenance, diagnosis and prognosis.

The present invention also provides a method and system for selecting raw material from a plurality of locations for delivery to a production site for the production of a primary product, including:
Receiving a customer order, the order specifying characteristics of the primary product,
Determining, from the customer order, a specification of required raw materials to be processed in order to provide the primary product order by the customer,
Determining, with reference to a database identifying characteristics and quantities available of raw material resources, which available raw material resource can be utilised in order to substantially meet the specification of required raw materials.

Preferably, the primary product is an output of a process in the steel making and/or coal and/or iron ore industries, such as any one or a combination of, but not limited to, hot metal, pig iron, slab, clean coal, blended coal, coke, lump and nuts, blended lump and fines (Fe), sinter.

Preferably, the determined available raw materials are (each) supplied in a manner coordinated with the production of the processed product.

Furthermore, the present invention provides a system of determining a supply chain of raw material(s) in a process of primary product production, the system including:
first means for creating a new supply chain for each order,
second means for repetitively and/or continuously creating a new supply chain for the order for at least a portion of the time taken to move the raw material(s) from source to a final destination.

Preferably, each supply chain created is based on information gathered regarding at least one of the raw material(s).

Preferably, the system is adapted to the production of an output of a process in the steel making and/or coal industries, such as any one or a combination of, but not limited to, hot metal, pig iron, slab, clean coal, blended coal, coke, lump and nuts, blended lump and fines (Fe), sinter.

Preferably, the information gathered relates to quality, quantity, and availability of the raw material(s).

Preferably, the second means additionally creates further supply chain(s), taking into account hitherto unforeseen events, such as changes in customer requirements, equipment availability, asset/ore body/deposit/reserve availability, feed variation, local commodities and characteristics.

In essence, the present Invention is based on determining a new created supply chain for each order of each customer to be produced and on an automatic / repetitive basis via computer aided technology. This stems from having a number of 'assets', preferably each 'asset', in the supply chain connected to an information and/or event management system and/or system chain system. In fact, the present invention enables a supplier of a primary product to source or mine raw materials on the basis of knowing which order(s) the materials are destined to fulfil, and which thus enables the supplier of the primary product to source or utilise existing materials of a particular quality and/or composition and/or availability, knowing that these particular materials will enable production of a relatively quantifiable customer product. The primary product supplied may be at the end of a production process, or supplied from any point in/during the production process, dependent on customer requirements. The present Invention may also include know delays calculated on statistical information, for example in-foundry or in-refinery processing delays, in order to determine a relatively correct time for raw material or product flow through the supply chain and/or for filling the customer order from initial sourcing of raw materials.

The present invention also enables a number of advantages to be realised when compared to prior art arrangements and current practices, such as:
- Increased predictability of Hot Metal, stainless steel and Aluminium chemistry and coke specifications. Knowing the requirements of a customers order, it is possible to source various raw materials and more exact qualities of each of those materials in order to more closely meeting the customer order,
- Reduced variation of Hot Metal, stainless steel and Aluminium chemistry and coke specifications. Furthermore, knowing the requirements of a customer's order, raw materials can be sourced and their delivery coordinated substantially simultaneously to a foundry, so that the correct ingredients for the customers order are provided,
- Savings in costs in supply chain. The present invention enables the reduction or elimination of stockpiles, and also provides alternative supply chain(s) based on unpredictable or unexpected events,
- Increased availability/ knowledge of assets in supply chain,
- Increased yield from coal, bauxite, Alumina and iron ore reserves, and from blended beds of coal and Iron ore. This transpires due to a reduction In delivery of raw materials and Hot Metal production not meeting customer requirements,
- Extended economic viability of assets in supply chain. This results due to the improvement in supply chain costs, thus assets considered traditionally unviable, may now be considered viable,
- Reduced safety risk to people, based on a forecast of mine operations and automatic early warning of mission safety critical states generated from the local model and electronic memory of designed functional capability compared with history of use and with projected and/or planned usage and related to wear and fatigue scenarios based around known performance envelopes
- Reduced environmental impact resulting from a reduction In the need for stockpiles,
- Scaleable, because the fully interconnected, massively parallel, modularised architecture can be used at all levels of the CIM model (from sensors up to production and planning and back down to the actuators) and because the information may be communicated via telecommunications systems and the internet and is based on physical and business parameters so is not constrained by a protocol and is applicable to a range of makes and models of processing plant and equipment.
- Real-time distributed operations so that the controlling logic is located at the point of control, making it flexible and therefore being able to respond to perturbations before the overall process is disturbed and/or before the end result or goal is changed or adversely affected, updates to the operations can be Introduced without reducing the performance of the process, increasing the robustness of the process to local performance degradation such as asset wear or failure or loss of resources.
- Reduced apparent complexity of the supply chain or continuous production and refining processing of bulk raw materials via the system so that it is easier to install, operate and maintain the assets and resources in the supply chain. The benefits are increased availability of the supply chain and an increased yield from the raw materials being processed by the supply chain for a given productivity and capacity
- Complex resource planning reduced. The present invention provides less complexity on the part of operators and creates strategies for scenarios such as mine roof collapse, equipment breakdown, coal, bauxite, alumina & iron ore specification variation, customer requirement changes, market size and economics, asset value, stripping ratios, ships being prevented from leaving or arriving at port, etc.

In terms of the present invention, an 'asset' includes raw material(s), material reserve(s), stockpile(s), blended bed(s), haulage, mining equipment, port loading and unloading costs, foundry(s), refinery(s) and/or operational expertise.

Throughout the present specification, 'primary product' means an output of a process in the steel making and/or coal Industries, such as any one on a combination of, but not limited to, hot metal, pig iron, slab, clean coal, blended coal, coke, lump and nuts, blended lump and fines (Fe), sinter, Aluminium, Stainless Steel.

Preferred embodiments of the present invention will now be described with reference to the accompanying drawings, in which:
Figure 1 illustrates a prior art supply chain for raw materials.
Figure 2A and 2B illustrates an embodiment of the present invention.
Figure 3 illustrates, by way of a time line, a representation of the way in which the present invention is implemented, in one form,
Figures 4A, 4B and 4C illustrate examples of the present invention as applied to a Hot Metal supply chain in as much as different supply strategies and product compositions are illustrated,
Figures 5A and 5B illustrate yet a further representation of the present invention,
Figure 6 illustrates yet a further example of the present invention,
Figure 7 illustrates yet another example of the present invention, and
Figure 8 also illustrates another example of the present invention.

### DESCRIPTION OF PREFERRED EMBODIMENTS

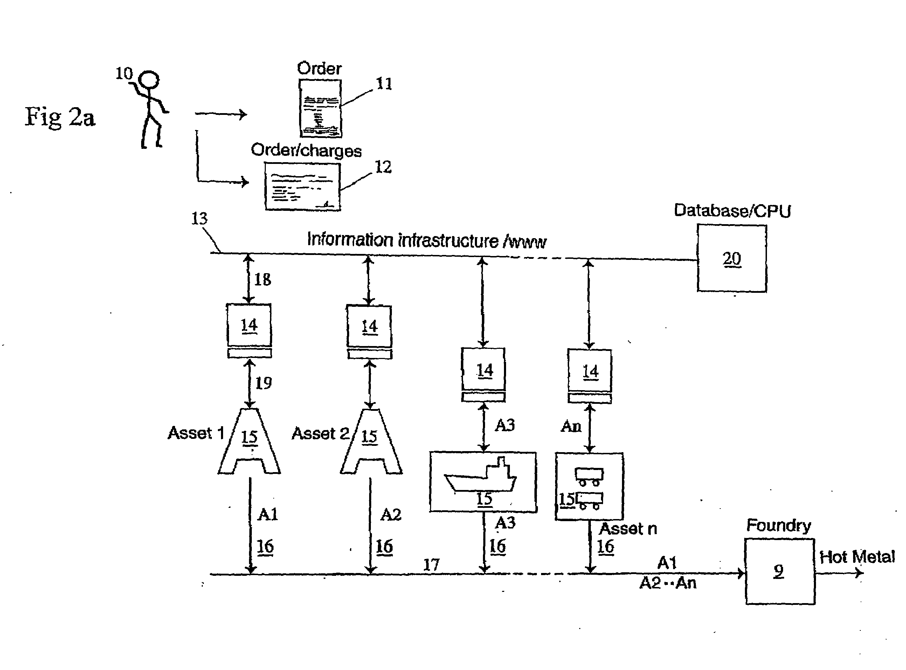

Referring to figure 2A, one overall generic description of the present invention can be made. A customer 10 places an order of processed product having specifications as set out in the order 11. The order includes, typically, quality and quantity of processed product, such as pig iron or other product as required. Subsequent changes 12 may also be made. This information is input to a database or computer 20. The computer or database then determines from this order which sources of raw materials or ore bodies, represented as 'assets 1 to n' and denoted by numeral 15 are to be used to supply raw materials to the foundry or refinery in order to produce a primary product (for example hot metal, Aluminium, stainless steel or blended coal) which fulfils the customers order and/or changes. The raw material(s) may be supplied from any 'asset', whether from only one asset or a number of assets.

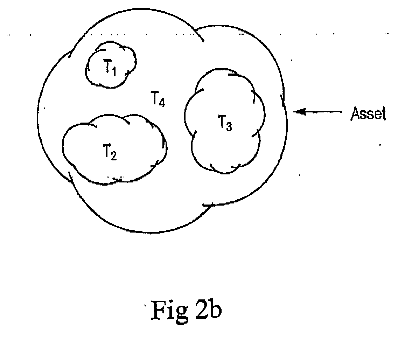

Referring to Figure 2B, which represents an asset, such as a mine site, this illustrates that within an asset, the may be regions of raw materials of different compositions or characteristics (T1, T2, T3 T4, etc). These regions may also be listed as an 'asset' for the purpose of the present invention in as much as they may be included as a supply source for raw material(s). Equally, it may be possible that within a stockpile (not shown) different compositions or characteristics may also be located.

Also, known time delays (for example based on statistical or industry data) for raw material or primary product delivery or in-refinery or in-foundry processing requirements / delays can be factored into meet the customer's delivery schedule. For example, transport times or delays and foundry processing or production times can be taken into account in meeting the customer order requirements. These times can be utilised in determining the scheduling and management of supply as put to the raw material source.

The present invention, through its access to certain data, such as asset information, delays and various scenarios (provided or calculated) provides a determination and / or co-ordination of primary product to met customer requirements.

This determination of the source of raw materials is possible because information regarding each 'asset' is provided or gathered locally, and on a continuous or periodic basis. In one embodiment, each asset is 'tagged', in other words, identified uniquely. This unique tag may be associated with the particular asset throughout its journey to the end product and customer. This information is provided in the present invention at a local point 14 and/or by means of a 'tag' denoted in figure 2 as A1, A2, A3 through to An, each corresponding to their respective asset. The tag information may be reported daily and/or at certain points, as is required, in the overall product delivery and production process. The tag also enables the movement of the asset(s) to be monitored throughout the production delivery and process. The information provided locally at 14 is, for example:
- Details describing the asset's fundamental physical properties and functional capabilities based on the system-wide business performance metrics: in the particular case of coking coal for Hot Metal, typical examples are ash, sulphur, phosphorus, vitrinite, volatile matter, fluidity, crucible swell number, moisture, sizing. Other information as is required may also be described,
- Business parameters to be optimised by the system-wide solution and managed locally at the asset: namely variable & fixed operating costs, asset's mission life and return on investment, productivity and yield and availability,
- Presence of raw materials in the processing assets,
- History of operational use and performance of the asset,
- Details describing the designed operating envelop of the asset,
- Schedule of planned use of the asset,
- Operational status of the asset including current status, history and forecast status against schedule of planned use of the asset,
- Asset's physical configuration as (a) options during the phase when a solution is being sought, as (b) the proposed set points and or utilisation strategy when a system-wide solution has been found, and as (c) the current operating set-up during operational use,
- Asset's operational capabilities (a) during the phase when a solution is being sought and (b) the functional set-up when a solution is being executed,
- The processing step being performed by the asset in terms of when the step is being performed, the processing being done on the material by the processing asset, the geographical location of the asset and/or the material being processing by the asset.

It can well be appreciated that this 'local information' does not need to be stored 'locally'. For example, using well-known communication techniques it is understood that the 'local information' may be stored or be accessible at any point in a networked system. The 'local' information simply is required to relate 'locally' to the particular asset.

Based on this local information 14, the present Invention has in its database 20, or has access to 14, data concerning the assets 1 to n. Thus, it is possible to know that a certain quantity of raw material having a certain composition which is required for a specific order is able to be sourced from an asset or a number of assets. The raw material may also be sourced from a stockpile or mine, where the local information 14 regards stockpile or mine characteristics and related data.

Based on this knowledge of where raw material can be sourced, a schedule for delivery of raw material and coordinating the arrival of raw material to the blast furnace (where possible) is determined. It may also be advantageous for a particular raw material to be 'reserved' for particular client or order. In other words, it is possible to ensure a specific raw material or quantity is for only specific orders or customers.

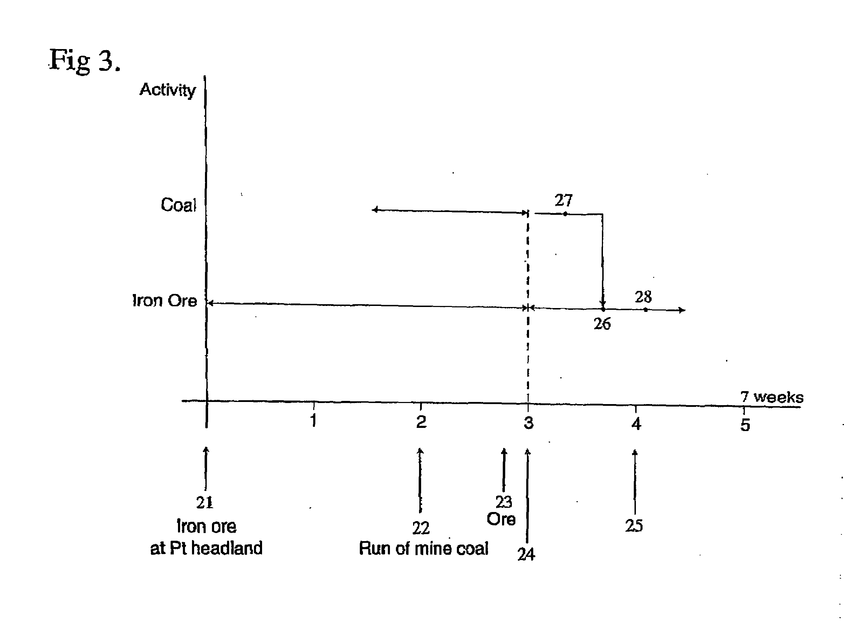

Figure 3 illustrates schematically, by way of example, a schedule. The compositions and quantities of each raw material in order to produce the Hot Metal is taken in this example to have already been determined.

In parallel are coal and iron ore time lines, in weeks. At time 21, iron ore is source from Port Hedland. At time 22, coal is mined. It is to be understood that the iron ore and/or coal may be sourced from a plurality of assets. For simplicity, we describe one asset source for each of iron ore and coal. The present invention is not to be so limited, however. From figure 3, it can be seen that the iron ore and coal have been scheduled to arrive substantially at the same time 24 at the steel works, for example Port Kembia. The coal is coked in coke ovens at time 27, fed at time 26 to the blast furnace 28. The Iron ore is also fed to the blast furnace at substantially that time. At time 25, Hot Metal can be obtained from a tap hole in the blast furnace. What the present invention provides, in one aspect, is the ability-to have relatively good knowledge of the output from the blast furnace, in terms of quality, quantity, etc, given that there is provided relatively good and detailed data regarding the input raw materials to the furnace: The present invention also reduces or eliminates the need for stockpiled materials, the raw material(s) may be feed directly to the furnace is they are needed. If there is a given time delay for the steel works, based on data from the steel works, the time delay could be factored into a schedule for the delivery of product to the customer.

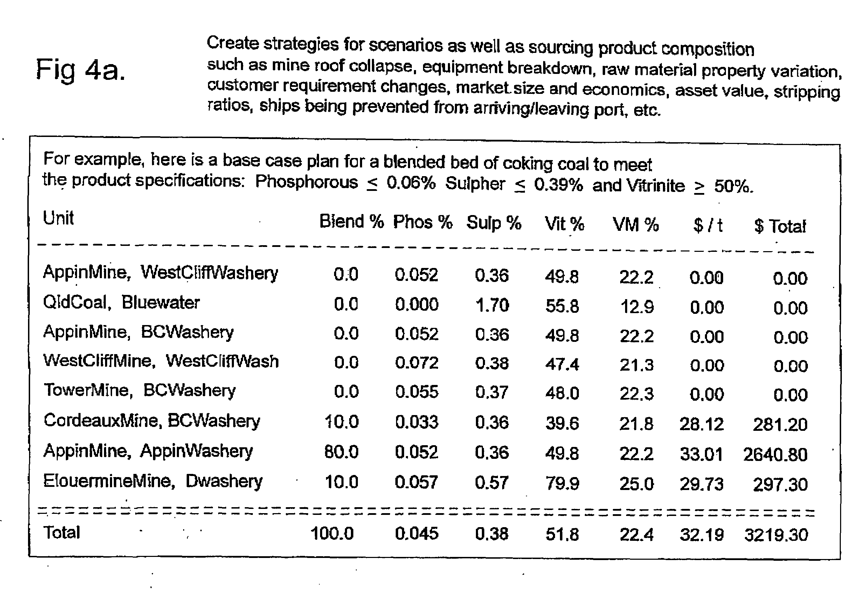

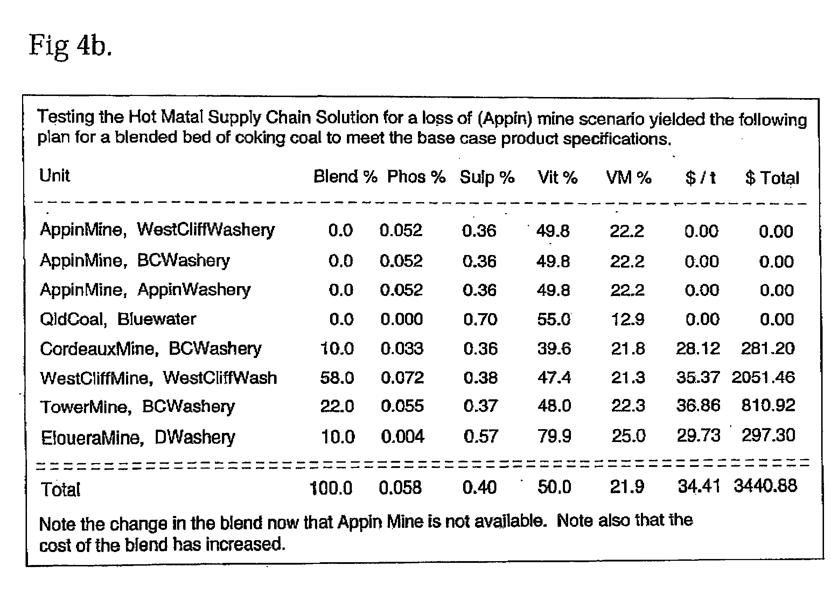

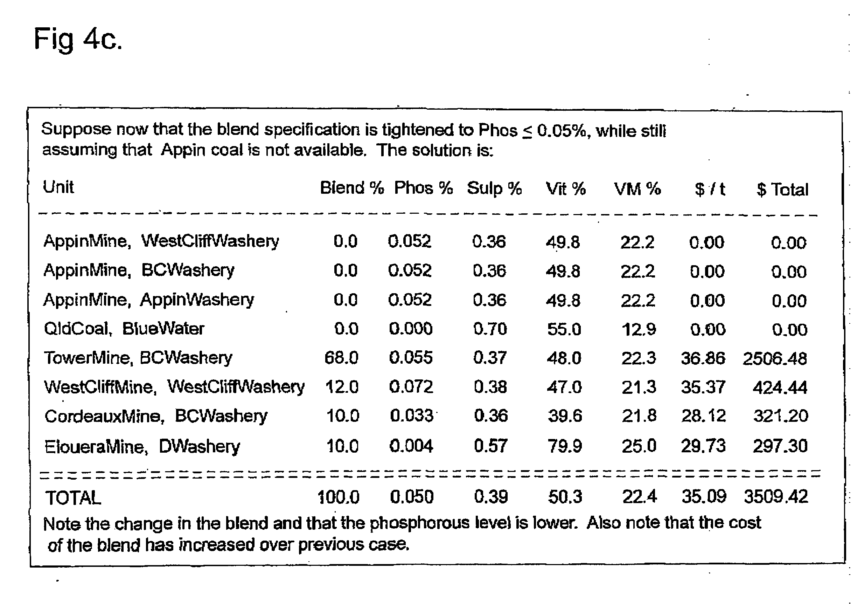

Figure tables 4A, 4B and 4C illustrate examples of the determination undertaken by the present invention, and as shown in the Tables 4A, 4B and 4C, there are example product compositions and from which 'assets' or ore bodies they are sourced. Figures 4A, 4B and 4C also illustrates that with the information 14 or tag associated with each asset, it is possible to provide a number of possible raw material and/or product supply/delivery to customers depending on events, as yet unpredictable in mining and product delivery operations. For example, what if, with reference to figure 4A, the 'Appin Mine, Appinwashery' was unable to fulfil the delivery of raw material as requested in the initial determination of the present invention. The result is illustrated in figure 4B. The present invention, in continuously or periodically making determinations for, each order and/or customer, enables a fresh determination to be made for such events. These determinations may also be made by way of predictions based on statistical information and or anticipated or possible scenarios. In the case illustrated, some raw material is now sourced from 'WestCliffMine, WestCliffWash' and some raw material is sourced from 'TowerMine, BCWashery'.

In the situation where a fresh determination is made and raw material is altered, say, due to the need for management of unexpected events, the present invention may have to find a raw material or a number of raw material source(s), whilst not being exactly the same as the raw material which cannot be delivered, that most closely matches or is the most commercially effective, to the raw material which cannot be delivered.

In fact, in one embodiment of the present invention, it is contemplated that provision is made for the determination of a relatively large number (even 90 or more) alternative supply chains, each alternative supply chain being determined bearing in mind a change in the initially selected supply chain. In the example above, the "Appin Mine Appinwashery' was unavailable. The present invention, in this form, would have determined, in advance, an alternative supply chain to meet such a scenario, and thus the customer order can continue to be met by way of utilising this alternative scenario.

This is done periodically, continuously and/or automatically by the assets running forward predictions derived from the information provided locally at 14 and / or system of the present Invention running predictions to generate scenarios when particular assets and supply chains would not be viable and when assets and supply chains would be at optimal utilisation. This results in the generation of asset portfolio management strategies for current and future customer requirements. For example, scenarios may be generated based on one or a number of events, such as floods, labour force disruptions, earthquakes, geomechanical failure of a mine, changes in water tables, equipment failure, road or rail infrastructure disruptions, weather conditions, technical changes, processing times or delays, delivery/transport times or delays, likely customer order changes, foundry efficiency or delays or updates.

Figure 4C illustrates the result of a fresh determination in which the product characteristics have been changed. The Phosphorous needs to be less than or equal to 0.005%. Resultant changes in the raw material sources can be seen as a consequence.

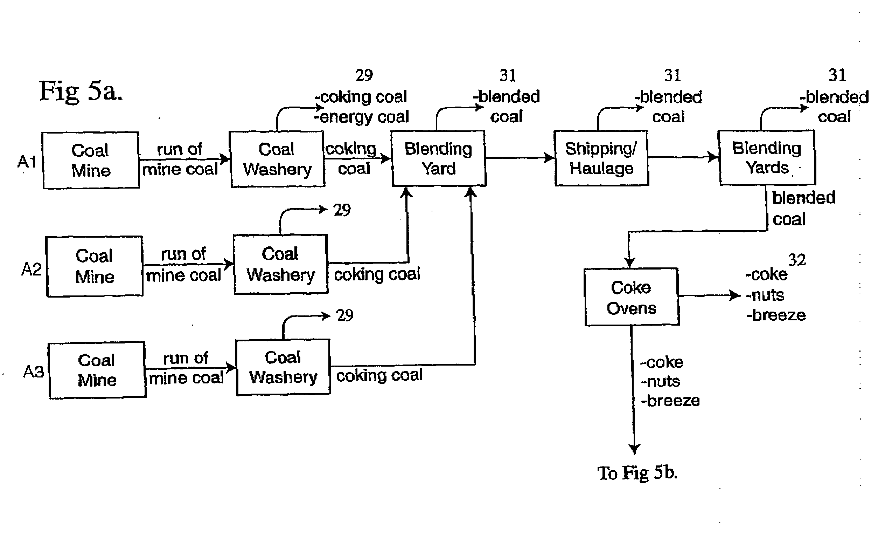

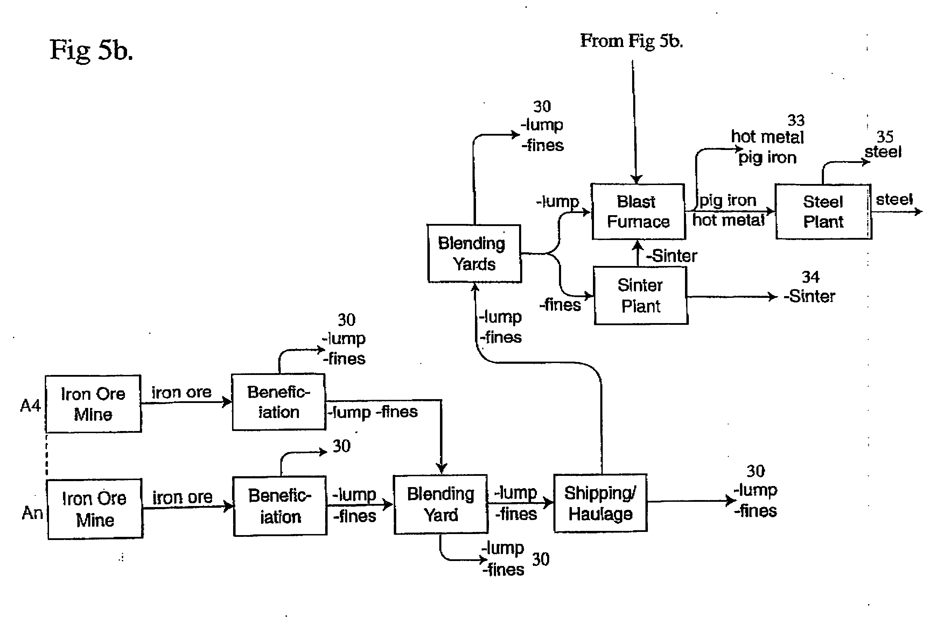

Referring to figures 5A and 5B, another embodiment of the present invention is shown. By way of applying the essence of the present invention, it can be seen that the 'primary product' supplied in accordance with a customer's order does not need to be the final output of, for example, a steel making process. In fact, the present invention serves to provide a newly created supply chain for each primary product supplied in accordance with a customer order. Thus the present invention selects any one of, or a combination of, assets A1 to An in a manner that enables supply of the customer order.

The customer order may include coking and/or energy coal 29 from one or a number of assets, lump and/or fines 30 from one or a number of assets. Equally; the order may seek blended coal 31, coke, nuts and/or breeze 32, hot metal and/or pig iron 33, sinter 34, and/or steel 35. It Is to be understood that the primary product is a raw material which has been processed or refined in some form. The invention is not limited to only these primary products, and may include any primary product within the coal, Aluminium and/or steel making industries.

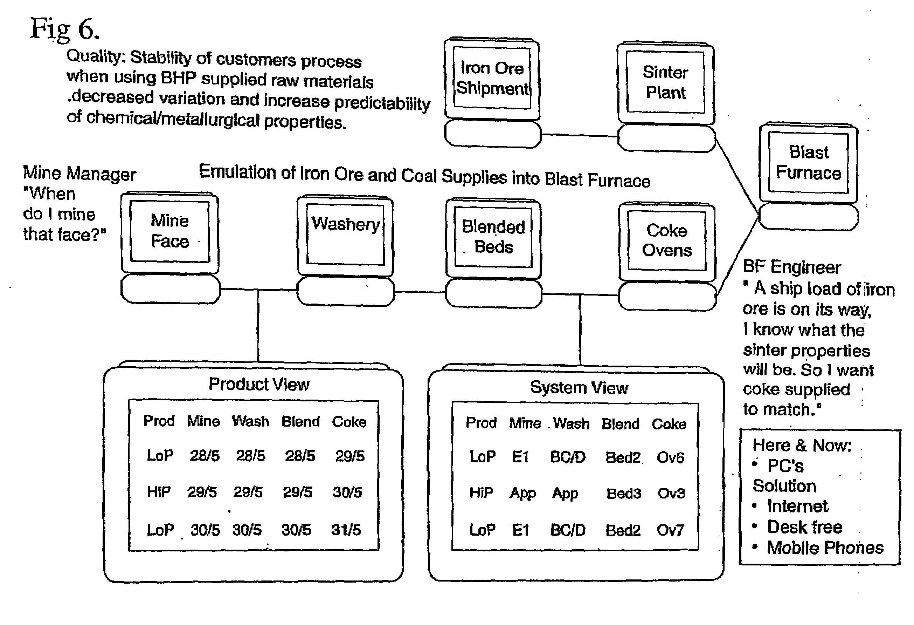

Figure 6, illustrates another example of the present invention. Information regarding assets are displayed by product view, and/or by system view. Assets, such as mine face, washery, coke ovens, sinter plant, etc provide the information to the present invention. Again, coordination of raw material delivery can be provided to the blast furnace. Again, the invention is not limited to only the iron ore and coal emulation depicted.

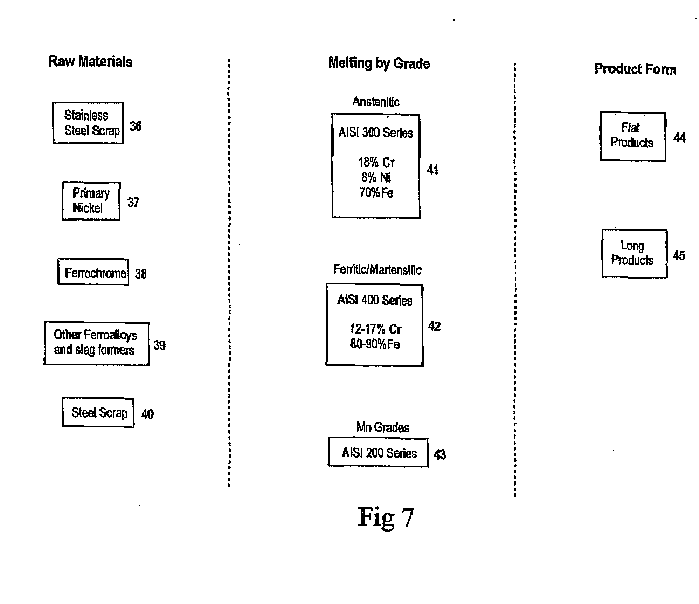

Figure 7 illustrates one example of the present invention as applied to Stainless Steel production. In stainless steel production, a number of raw materials are sourced, such as stainless steel scrap 36, primary nickel 37, ferrochrome 38, other ferralloys and slay formers as would be known in the art 39 and scrap steel 40. The present invention as described above can be used to schedule the raw materials in a manner to suit customer orders and / or production requirements. The present invention may be used to produce anstenitic grade 41, ferritic / martensitic grade 42 and / or Mn grade stainless steel 43. These grades are typically used to produce to produce flat products, such as sheet, strip ad plate, and long products, such as bar, rod and wire, for use in process plant, building and construction, transportation, food/beverage handling, automotive and consumer durables.

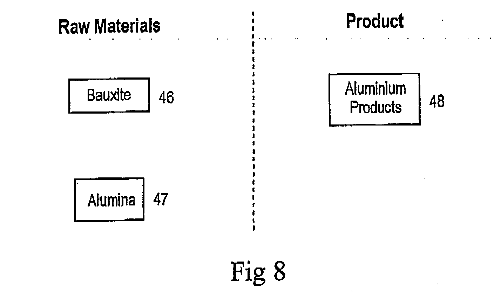

Figure 8 illustrates one example of the present invention as applied to Aluminium production. In Aluminium production, a number of raw materials are sourced, such as bauxite 46, and alumina 47, such recycled aluminium scrap, as would be well known in the art. These raw materials are typically delivered to a refinery. The present invention as described above can be used to schedule the raw materials in a manner to suit customer orders and / or production requirements. The present invention may be used to produce Aluminium 48. Aluminium is typically used in many applications, as would be known in the art.

As the present invention may be embodied In several forms without departing from the spirit of the essential characteristics of the invention, it should be understood that the above described embodiments are not to limit the present invention unless otherwise specified, but rather should be construed broadly within the spirit and scope of the invention as defined in the appended claims. Various modifications and equivalent arrangements are intended to be included within the spirit and scope of the invention and appended claims.

## Claims

1. A system adapted to determine a preferred supply path for raw material(s) to be used in the production of a primary product, the system including:
a network for providing information corresponding to at least one asset, first means for determining customer requirements,
second means for determining production criteria, where determination is made with reference to the information corresponding to the at least one asset, and
third means repetitively determining utilisation of the at least one asset to enable production of the primary product substantially in accordance with the customer requirements.

2. A system as claimed in claim 1, wherein the third means periodically or continuously determines asset utilisation.

3. A system as claimed in claim 2, wherein the third means repetitively determines the asset utilisation based on changes in the information corresponding to at least one of the at least one asset(s).

4. A system as claimed in claim 1, 2 or 3, wherein the third means determines utilisation with reference to fourth means for asset management including repair and maintenance, diagnosis and prognosis.

5. A method for selecting raw material from a plurality of locations for delivery to a processing site for the production of a primary product, including:
receiving a customer order, the order specifying characteristics of the primary product,
determining, from the customer order, a specification of required raw materials to be processed in order to provide the primary product order by the customer,
determining, with reference to a database identifying characteristics and quantities available of raw material resources, which available raw material resource can be utilised In order to substantially meet the specification of required raw materials.

6. A method as claimed in claim 5, wherein the primary product is an output of a process in the steel making and/or coal industries, such as any one or a combination of, but not limited to, hot metal, pig iron, slab, clean coal, blended coal, coke, lump and nuts, blended lump and fines (Fe), sinter.

7. A method as claimed in claim 5 or 6, wherein the determined available raw materials are (each) supplied in a manner coordinated with the production of the primary product.

8. A system for selecting raw material from a plurality of locations for delivery to a processing site for the production of a primary product, including:
input means for receiving a customer order,
first means for identifying from the order, characteristics of the product to be processed,
second means for determining, from the first means, a specification of required raw materials to be provided in order to substantially meet the customer order,
third means for determining, with reference to a database, a selection of raw material(s) each having characteristic(s) and a quantity available and which can be utilised in order to substantial meet the specification of required raw materials.

9. A system as claimed In claim 8, further including:
means for tracking a number of raw material(s) throughout a portion of their movement from source to customer.

10. A system as claim in claim 8 or 9, wherein the processed product is an output of a process in the steel making and/or coal industries, such as any one or a combination of, but not limited to, hot metal, pig iron, slab, clean coal, blended coal, coke, lump and nuts, blended lump and fines (Fe), sinter.

11. A system as claimed in claim 8, 9 or 10, wherein the determined available raw materials are (each) supplied in a manner coordinated with the production of the processed product.

12. A system of determining a supply chain of raw materlal(s) in a process of primary product production, the system including:
first means for creating a new supply chain for each order,
second means for repetitively and/or continuously creating a new supply chain for the order for at least a portion of the time taken to move the raw material(s) from source to a final destination.

13. A system as claimed in claim 12, wherein each supply chain created is based on information gathered regarding at least one of the raw material(s).

14. A system as claimed In claim 12 or 13, adapted to the production of an output of a process in the steel making and/or coal industries, such as any one or a combination of, but not limited to, hot metal, pig iron, slab, clean coal, blended coal, coke, lump and nuts, blended lump and fines (Fe), sinter.

15. A system as claimed in claim 13 or 14, wherein the information gathered relates to quality, quantity, and availability of the raw material(s).

16. A system as claimed in any one of claims 1 to 4, or 8 to 15, wherein the second means and/or third means additionally creates further supply chain(s), taking into account events, such as changes in customer requirements, equipment availability, asset/ore body/deposit/reserve availability, feed variation, local commodities, supply delays/timing, transport delays/timing and characteristics.

17. A method as claimed in any one of claims 5 to 7, further including the step of repetitively and/or continuously determining a new supply chain for the order for at least a portion of the time taken to move the raw material(s) from source to a final destination.

18. A method as claimed in any one of claims 5 to 7 or 17, further including the step of determining a plurality of supply chains, taking into account events, such as changes in customer requirements, equipment availability, asset/ore body/deposit/reserve availability, feed variation, local commodities, supply delays/timing, transport delays/timing and characteristics.

19. A primary product made in accordance with a method as claimed in any one of claims 5, 6, 7, 17 or 18.

20. A primary product made in accordance with a method as claimed in any one of claims 5, 6,7,17 or 18.
